# EUROPÄISCHE PATENTSCHRIFT

(11) **EP 3 030 847 B1**
(45) Veröffentlichungstag und Bekanntmachung des Hinweises auf die Patenterteilung: **27.12.2017**
(21) Anmeldenummer: 14771188.1
(22) Anmeldetag: 07.08.2014
(51) Int. Cl.: F24J 2/32, F24J 2/46, F28D 15/02, H01J 7/18, H01K 1/54, H01K 1/56

(54) **WÄRMEÜBERTRAGER**
HEAT EXCHANGER
ÉCHANGEUR DE CHALEUR

(30) Priorität: 08.08.2013 DE 102013108601
(43) Veröffentlichungstag der Anmeldung: 15.06.2016
(73) Patentinhaber: Viessmann Werke GmbH & Co. KG, 35108 Allendorf (DE)
(72) Erfinder: HAFNER, Bernd, 35108 Allendorf (DE); WENZLER, Sigurd, 35066 Frankenberg (DE)
(74) Vertreter: Wolf, Michael
(86) Internationale Anmeldenummer: PCT/DE2014/100286
(87) Internationale Veröffentlichungsnummer: WO 2015/018399

(56) Entgegenhaltungen:
- WO-A2-2013/034593
- DD-A1- 225 772
- DE-A1- 3 604 909
- DE-A1- 19 714 774
- US-A- 5 217 063

## Beschreibung

Die Erfindung betrifft einen Wärmeübertrager gemäß dem Oberbegriff des Patentanspruchs 1.

Ein Wärmeübertrager der eingangs genannten Art ist allgemein bekannt. Ein solcher Wärmeübertrager besteht aus einem Wärmerohr, in dem ein fluides (teilweise flüssiges, teilweise gasförmiges) Kältemittel gespeichert ist.

Der Erfindung liegt die Aufgabe zugrunde, einen Wärmeübertrager der eingangs genannten Art zu verbessern. Insbesondere soll ein Wärmeübertrager geschaffen werden, dessen - unter Normalbedingungen angestrebte - Funktionsweise, nämlich Wärme vom einen (unteren) Ende des Wärmerohrs (also vom Verdampfer) zum anderen (oberen) Ende des Wärmerohrs (also zum Kondensator) zu übertragen, ab einer bestimmten, vorgegebenen Temperatur automatisch unterbrochen wird.

Diese Aufgabe ist mit einem Wärmeübertrager der eingangs genannten Art durch die im Kennzeichen des Patentanspruchs 1 aufgeführten Merkmale gelöst.

Nach der Erfindung ist also vorgesehen, dass zum räumlichen Verdrängen des fluiden Kältemittels im Wärmerohr ein ein Gas unterhalb einer vorgegebenen Temperatur sorbierendes und oberhalb der vorgegebenen Temperatur desorbierendes Speicherelement angeordnet ist.

Mit anderen Worten zeichnet sich die erfindungsgemäße Lösung somit dadurch aus, dass im Wärmerohr ein Speicherelement, insbesondere ein so genanntes Molekularsieb wie zum Beispiel ein Metallhydrid, angeordnet ist, das ab einer bestimmten Temperatur ein im Speicherelement gespeichertes Gas freisetzt (desorbiert). Dieses Gas steigt im Wärmerohr nach oben, also in den Kondensator des Wärmerohres. Dementsprechend kann kein Kältemittel mehr in diesen Bereich des Wärmerohrs aufsteigen, d. h. die Wärmeübertragerfunktion wird unter- bzw. abgebrochen. Sinkt nun die Temperatur außerhalb des Wärmeübertragers bzw. des Speicherelements wieder ab, erhält dieses seine Fähigkeit zurück, das Gas aufzunehmen (zu sorbieren), d. h. die unter Normalbedingungen angestrebte Wärmeübertragerfunktion wird wieder fortgesetzt. Bezüglich der Auswahl des Gases ist dabei vorgesehen, dass dieses jedenfalls im Rahmen der vorgesehenen Betriebsbedingungen des Wärmeübertragers nicht kondensierbar ist bzw. nicht kondensiert.

Andere vorteilhafte Weiterbildungen ergeben sich aus den abhängigen Patentansprüchen.

Der Vollständigkeit halber wird noch auf das weiter abliegende Dokument DD 225 772 A1 hingewiesen, in dem zwar ein in einem Wärmerohr gelagertes Adsorptionsmittel offenbart ist; dieses dient allerdings der Aufnahme von Verunreinigungen aus dem Kältemittel, d. h. eine wie für die vorliegende Erfindung wesentliche Desorptionsphase soll bei dieser Lösung gerade nicht stattfinden DD 225 772 A1 beschreibt einen Wärmeübertrager gemäss dem Oberbegriff des Anspruchs 1. Der erfindungsgemäße Wärmeübertrager einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

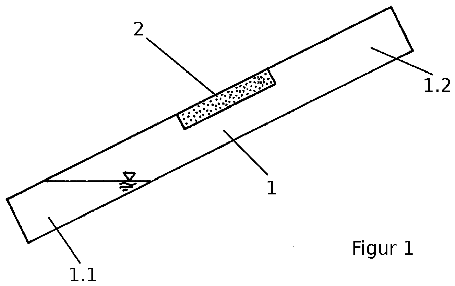

Es zeigt
- Figur 1: schematisch und im Schnitt den erfindungsgemäßen Wärmeübertrager mit dem Speicherelement.

Der in Figur 1 dargestellte Wärmeübertrager besteht in bekannter Weise zunächst aus dem eigentlichen Wärmerohr 1. In diesem ist ein fluides (je nach Betriebszustand teilweise flüssiges, teilweise gasförmiges) Kältemittel gespeichert bzw. gelagert. Das Wärmerohr 1 weist an seinem unteren Ende einen zur Verdampfung des Kältemittels dienenden Verdampfungsbereich 1.1 und an seinem oberen Ende einen zum Kondensieren des Kältemittels dienenden Kondensationsbereich 1.2 auf.

Wesentlich für den Wärmeübertrager ist nun, dass zum räumlichen Verdrängen des fluiden Kältemittels im Wärmerohr 1 ein ein Gas unterhalb einer vorgegebenen Temperatur sorbierendes (aufnehmendes) und oberhalb der vorgegebenen Temperatur desorbierendes (abgebendes) Speicherelement 2 angeordnet ist. Dieses Maßgabe führt, wie eingangs erläutert, dazu, dass bei Überschreiten der vorgegebenen Temperatur das Gas aus dem Speicherelement 2 austritt, im Wärmerohr 1 nach oben steigt und dort - bei entsprechender Volumenauslegung bzw. Dimensionierung der Komponenten und Fluide - den Kondensationsbereich 1.2 ausfüllt. Hierdurch wird verhindert, dass im Verdampfungsbereich 1.1 verdampftes Kältemittel in den Kondensationsbereich 1.2 aufsteigen und dort kondensieren kann, d. h. insgesamt erfolgt ab der vorgegebenen Temperatur eine Funktionsabschaltung des Wärmeübertragers.

Der Wärmeübertrager wird reaktiviert, sobald die genannte Temperatur unterschritten und das Speicherelement 2 das Gas, das im Rahmen der vorgesehenen Betriebsbedingungen des Wärmeübertragers nicht kondensierbar ausgebildet ist, wieder sorbiert bzw. aufnimmt.

Bezüglich des Speicherelements 2 ist besonders bevorzugt vorgesehen, dass dieses als Molekularsieb, besonders bevorzugt als Metallhydrid, ausgebildet ist.

Ferner ist vorgesehen, dass das Wärmerohr 1 als Teil eines thermischen Solarkollektors ausgebildet ist. In diesem Zusammenhang ist schließlich vorgesehen, dass der Verdampfungsbereich 1.1 des Wärmerohres 1 mit einem Absorber des Solarkollektors wahlweise verbunden oder in diesem integriert und dass der Kondensationsbereich 1.2 des Wärmerohres 1 mit einem Wärmeträgerkreislauf einer Solaranlage verbunden ausgebildet ist.

### Bezugszeichenliste

- 1: Wärmerohr
- 1.1: Verdampfungsbereich
- 1.2: Kondensationsbereich
- 2: Speicherelement

## Patentansprüche

1. Wärmeübertrager, umfassend ein Wärmerohr (1), in dem ein fluides Kältemittel gespeichert ist,
**dadurch gekennzeichnet,**
**dass** zum räumlichen Verdrängen des fluiden Kältemittels im Wärmerohr (1) ein ein Gas unterhalb einer vorgegebenen Temperatur sorbierendes und oberhalb der vorgegebenen Temperatur desorbierendes Speicherelement (2) angeordnet ist.

2. Wärmeübertrager nach Anspruch 1,
**dadurch gekennzeichnet,**
**dass** das Speicherelement (2) als Molekularsieb, besonders bevorzugt als Metallhydrid, ausgebildet ist.

3. Wärmeübertrager nach Anspruch 1 oder 2,
**dadurch gekennzeichnet,**
**dass** das Gas im Rahmen der vorgesehenen Betriebsbedingungen des Wärmeübertragers nicht kondensierbar ausgebildet ist.

4. Wärmeübertrager nach einem der Ansprüche 1 bis 3,
**dadurch gekennzeichnet,**
**dass** das Wärmerohr (1) als Teil eines thermischen Solarkollektors ausgebildet ist.

5. Wärmeübertrager nach einem der Ansprüche 1 bis 4,
**dadurch gekennzeichnet,**
**dass** das Wärmerohr (1) einen zur Verdampfung des Kältemittels dienenden Verdampfungsbereich (1.1) und einen zum Kondensieren des Kältemittels dienenden Kondensationsbereich (1.2) aufweist.

6. Wärmeübertrager nach Anspruch 5,
**dadurch gekennzeichnet,**
**dass** der Verdampfungsbereich (1.1) des Wärmerohres (1) mit einem Absorber des Solarkollektors wahlweise verbunden oder in diesem integriert ausgebildet ist.

7. Wärmeübertrager nach Anspruch 5 oder 6,
**dadurch gekennzeichnet,**
**dass** der Kondensationsbereich (1.2) des Wärmerohres (1) mit einem Wärmeträgerkreislauf einer Solaranlage verbunden ausgebildet ist.

## Claims

1. Heat transfer device comprising a heat pipe (1), in which a fluid coolant is stored,
**characterized in that**
a storage element (2) which sorbs a gas below a predetermined temperature and desorbs it above the predetermined temperature is arranged in the heat pipe (1) for spatially displacing the fluid coolant.

2. Heat transfer device according to claim 1,
**characterized in that**
the storage element (2) is in the form of a molecular sieve, particularly preferably a metal hydride.

3. Heat transfer device according to claim 1 or 2,
**characterized in that**
the gas is formed so as to be non-condensing within the range of the intended operating conditions of the heat transfer device.

4. Heat transfer device according to any one of claims 1 to 3,
**characterized in that**
the heat pipe (1) is constructed as part of a thermal solar collector.

5. Heat transfer device according to any one of claims 1 to 4,
**characterized in that**
the heat pipe (1) includes an evaporation zone (1.1) which serves for evaporating the coolant and a condensation zone (1.2) which serves for condensing the coolant.

6. Heat transfer device according to claim 5,
**characterized in that**
the construction of the evaporation zone (1.1) of the heat pipe (1) is such that it is either connected to an absorber of the solar collector or integrated therein.

7. Heat transfer device according to claim 5 or 6,
**characterized in that**
the construction of the condensation zone (1.2) of the heat pipe (1) is such that it is connected to a heat carrier circuit of a solar energy system.

## Revendications

1. Échangeur de chaleur, comprenant un caloduc (1) dans lequel est stocké un réfrigérant fluide,
**caractérisé en ce**
**qu'**un élément de réservoir (2) sorbant un gaz en-dessous d'une température prédéfinie et désorbant le gaz au-dessus d'une température prédéfinie est disposé pour refouler physiquement le réfrigérant fluide dans le caloduc (1).

2. Échangeur de chaleur selon la revendication 1,
**caractérisé en ce que**
l'élément de réservoir (2) est conçu en tant que crible moléculaire, en particulier de préférence en tant qu'hybride métallique.

3. Échangeur de chaleur selon la revendication 1 ou 2,
**caractérisé en ce que**
le gaz est conçu non condensable dans le cadre des conditions d'exploitation prévues de l'échangeur de chaleur.

4. Échangeur de chaleur selon l'une des revendications 1 à 3,
**caractérisé en ce que**
le caloduc (1) est conçu en tant que partie d'un collecteur solaire thermique.

5. Échangeur de chaleur selon l'une des revendications 1 à 4,
**caractérisé en ce que**
le caloduc (1) présente une partie de vaporisation (1.1) servant à vaporiser le réfrigérant et une partie de condensation (1.2) servant à condenser le réfrigérant.

6. Échangeur de chaleur selon la revendication 5,
**caractérisé en ce que**
la partie de vaporisation (1.1) du caloduc (1) est conçue au choix reliée à un absorbeur du collecteur solaire ou intégrée dans celui-ci.

7. Échangeur de chaleur selon la revendication 5 ou 6,
**caractérisé en ce que**
la partie de condensation (1.2) du caloduc (1) est conçue reliée à un circuit caloporteur d'une installation solaire.
